# EUROPEAN PATENT APPLICATION

(11) **EP 4 245 692 A1**
(43) Date of publication of application: **20.09.2023**
(21) Application number: 20961484.1
(22) Date of filing: 10.11.2020
(51) Int. Cl.: B65G 1/00

(54) **CONVEYANCE SYSTEM AND CONVEYANCE METHOD**

(71) Applicant: Fuji Corporation, Chiryu-shi, Aichi 472-8686 (JP)
(72) Inventor: SAWANAMI, Hisato, Chiryu-shi, Aichi 472-8686 (JP)
(74) Representative: Grünecker Patent- und Rechtsanwälte PartG mbB
(86) International application number: PCT/JP2020/041803
(87) International publication number: WO 2022/101956

(57) **Abstract**

A conveyance system for automatically conveying a product to a sales floor of a store includes a storage section that stores display shelf information including a layout of a display shelf provided in the sales floor and a type of a product to be displayed on the display shelf, a setting section that sets association information in which a product is associated with at least one of the display shelf that is a display destination of the product and a predetermined position in a vicinity including a front of the display shelf based on the display shelf information, a movement object that automatically conveys a product, and a control section that causes the movement object so as to automatically convey and place a product delivered to the store or a product delivered to the store and stored in a backyard of the store to the predetermined position based on the display shelf information and the association information.

## Description

### Technical Field

The present specification discloses a conveyance system and a conveyance method.

### Background Art

Conventionally, there has been proposed a system including an imaging section for imaging a display shelf (a product shelf) of a store, a movement section for moving the imaging section, a missing product detecting section for detecting a missing product based on an image picked up by the imaging section, and a conveyance section for conveying a product of which is detected as missing, from a backyard to the store (see, for example, Patent Literature 1). In this system, the imaging section can be moved by using rails installed on the ceiling of the store as a movement section, and missing products are detected by capturing images of respective display shelves at a predetermined timing.

### Patent Literature

Patent Literature 1: Japanese Patent Publication No. 2018-147138

### Summary of the Invention

### Technical Problem

In the above-described system, an imaging section and a movement section need to be installed such that all display shelves in a store can be imaged, and accordingly, not only a configuration is complicated, but also installation requires great expense. Meanwhile, in a store without the system, a worker needs to check products that are missing and require replenishment or needs to convey products to a display shelf for display, and thereby, a workload is increased. Particularly, a worker or the like with little experience takes time to check products to be replenished, or takes time to convey products to a display shelf. In addition, when there are many products to be replenished, it is also conceivable that stocking of products on the display shelf is delayed and sales thereof are affected.

A main object of the present disclosure is to reduce a display workload of products with a simple system configuration to efficiently display the products.

### Solution to Problem

The present disclosure employs the following means to achieve the above-described main object.

A conveyance system of the present disclosure is a conveyance system for automatically conveying a product to a sales floor of a store, and includes a storage section configured to store display shelf information including a layout of a display shelf provided in the sales store and a type of a product to be displayed on the display shelf, a setting section configured to set association information in which a product is associated with at least one of the display shelf that is a display destination of the product and a predetermined position in a vicinity including a front of the display shelf based on the display shelf information, a movement object configured to automatically convey a product, and a control section configured to cause the movement object so as to automatically convey and place a product delivered to the store or a product delivered to the store and stored in a backyard of the store to the predetermined position based on the display shelf information and the association information.

In the conveyance system of the present disclosure, association information in which a product is associated with at least one of a display shelf that is a display destination of the product and a predetermined position in the vicinity including the front of the display shelf is set based on display shelf information. In addition, a movement object is controlled to automatically convey and place a product at a predetermined position based on display shelf information and association information. Thereby, with a simple configuration that does not include an imaging section for imaging a display shelf, a movement section for moving the imaging section, and the like, products can be automatically conveyed and placed at a predetermined position in the vicinity including the front of the display shelf. Therefore, it is possible to reduce a display workload of products with a simple system configuration and to efficiently display the products.

### Brief Description of Drawings

Fig. 1 is an explanatory diagram illustrating an example of conveyance system 10.
Fig. 2 is an explanatory diagram schematically illustrating a configuration of store 50.
Fig. 3 is an explanatory diagram schematically illustrating a configuration of autonomous movement object 70.
Fig. 4 is an explanatory diagram illustrating an example of display shelf information 23a.
Fig. 5 is a flowchart illustrating an example of product delivery instruction processing.
Fig. 6 is a flowchart illustrating an example of conveyance schedule setting processing.
Fig. 7 is a flowchart illustrating an example of product conveyance instruction processing.
Fig. 8 is a flowchart illustrating an example of conveyance state monitoring processing.
Fig. 9 is an explanatory diagram illustrating an example of a conveyance path.
Fig. 10 is an explanatory diagram illustrating an example of a conveyance path.
Fig. 11 is an explanatory diagram illustrating an example of state screen S.

### Description of Embodiments

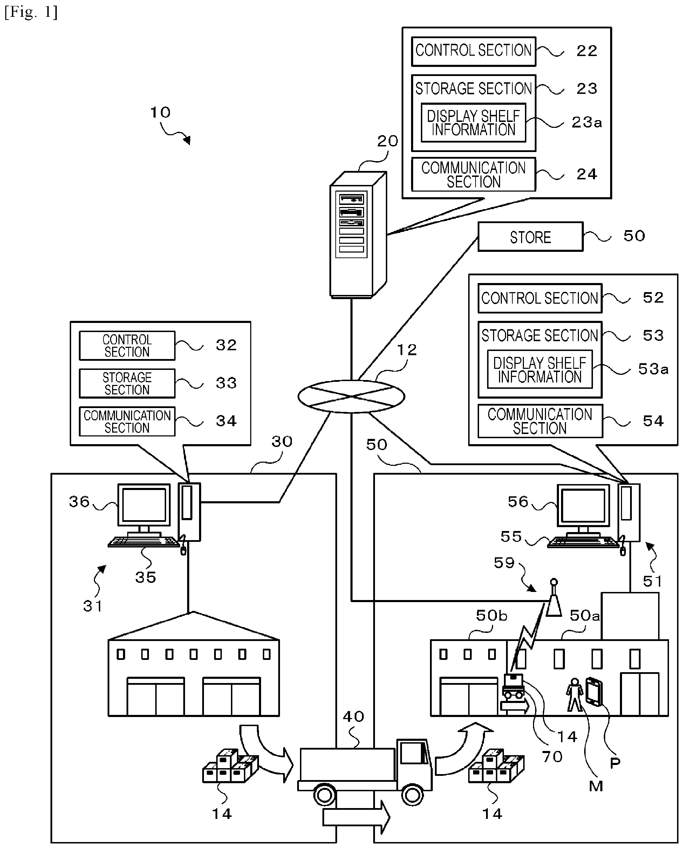

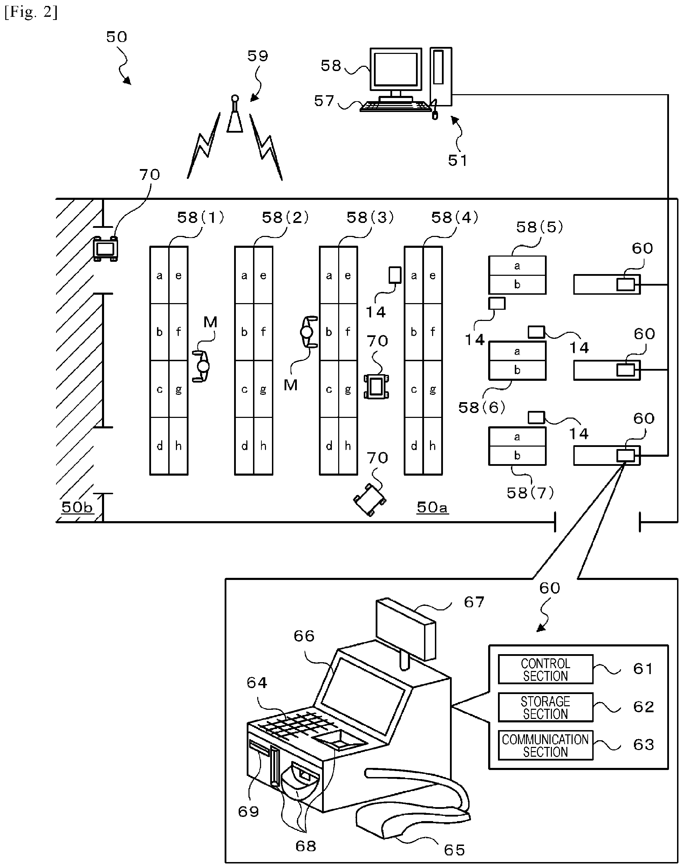

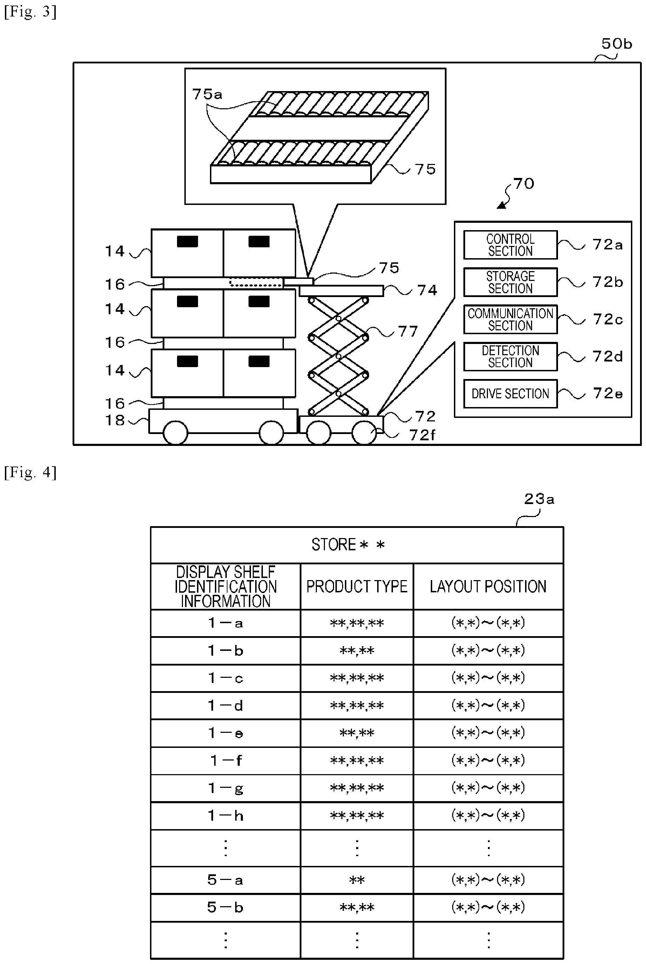

Next, embodiments of the present disclosure will be described with reference to the accompanying drawings. Fig. 1 is an explanatory diagram illustrating an example of conveyance system 10. Fig. 2 is an explanatory diagram schematically illustrating a configuration of store 50. Fig. 3 is an explanatory diagram schematically illustrating a configuration of autonomous movement object 70. Conveyance system 10 causes delivery vehicle 40 to deliver products 14 from distribution warehouse (distribution center) 30 to store 50 and causes autonomous movement object 70 to automatically convey delivered product 14 to store 50. Each of the drawings exemplifies products 14 in a boxed state.

The distribution warehouse 30 sorts products 14 delivered from a manufacturing company or the like, and delivers products 14 to each store 50 or the like. In distribution warehouse 30, a worker, a robot (not illustrated), or the like loads products 14 into delivery vehicle 40 such as a truck based on a delivery instruction. When products 14 are loaded, delivery vehicle 40 delivers products 14 to store 50 that is a delivery destination based on a delivery instruction. The delivery of products 14 is not limited to delivery vehicle 40 and may be performed by a train, a ship, an aircraft, a drone, or the like.

Store 50 includes sales floor 50a of products 14 and backyard 50b for storing products 14. Products 14 delivered to store 50 by delivery vehicle 40 is carried in backyard 50b by a driver of delivery vehicle 40, worker M (clerk) of store 50, a robot (not illustrated), autonomous movement object 70 , or the like. As illustrated in Fig. 3, in backyard 50b, multiple products 14 are stacked on cart 18 in a state where support member 16, such as a square member, a blocking member, or a pallet, is interposed between products 14. Products 14 are not limited to those stacked on cart 18 but may be stacked on a storage shelf or the like in the backyard 50b.

Multiple display shelves 58 (58(1) to 58(7)) for displaying products 14, and multiple POS terminals (POS registers) 60 serving as registers for checking out products 14 are arranged in sales floor 50a. The type of products to be displayed is determined for each of the multiple display shelves 58(1) to 58(7). In the present embodiment, the type of product 14 is determined for each of multiple regions a to h respectively obtained by dividing the display shelves 58(1) to 58(4) and each of multiple regions a and b respectively obtained by dividing the display shelves 58(5) to 58(7). A layout of the display shelves 58(1) to 58(7) is determined such that autonomous movement object 70 is capable of moving along paths between the display shelves 58(1) to 58(7).

As illustrated in Fig. 2, POS terminal 60 includes control section 61, storage section 62, communication section 63, input section 64, read section 65, display operation section 66, customer display section 67, deposit section 68, print section 69, and the like. Control section 61 includes CPU and controls all terminals. Storage section 62 stores various programs and various types of data. Communication section 63 communicates with store PC 51 or the like that manages store 50 and exchanges information. Input section 64 includes various input buttons and the like and is configured for a clerk to be capable of performing various operations. Read section 65 is configured with a bar code reader or the like and reads information such as the type and prices of products 14. Display operation section 66 is configured with a touch panel capable of displaying information, a total amount, and the like of read products 14 to a clerk or performing various operations. Customer display section 67 displays information, a total amount, and the like of read products 14 to a customer. Deposit section 68 includes an inlet and an outlet for small changes, an inlet for bills, and the like, and performs deposit of money, withdrawal of change, and the like. Print section 69 outputs a receipt on which details of purchased product 14, a total amount, and the like are printed.

Autonomous movement object 70 is configured as a vehicle capable of autonomously traveling to automatically convey products 14 from backyard 50b to sales floor 50a. Autonomous movement object 70 includes vehicle body portion 72, mounting portion 74, and lifting and lowering portion 77. Vehicle body portion 72 has wheels 72f for traveling attached thereto, and accommodates control section 72a, storage section 72b, communication section 72c, detection section 72d, and drive section 72e.

Control section 72a is a controller for controlling all of autonomous movement object 70. Control section 72a receives information from communication section 72c, a detection signal from detection section 72d, and the like, and outputs control signals and the like to drive section 72e, mounting portion 74, and lifting and lowering portion 77. Control section 72a checks a movement direction, a movement distance, a current position, and the like of autonomous movement object 70 based on a drive state or the like of the drive section 72e, and detects presence or absence of an obstacle based on a detection signal from detection section 72d. Control section 72a may receive positional information such as a GPS signal and the like to check a current position or the like of autonomous movement object 70. Storage section 72b stores various programs, various types of data, and the like necessary for traveling in sales floor 50a and backyard 50b. Communication section 72c can be connected to wireless access point 59 (see Figs. 1 and 2) arranged in store 50, and communicate with management device 20 through network 12. Detection section 72d detects presence or absence of an object around vehicle body portion 72 and a distance to the object by emitting laser light, an acoustic wave, or the like to the periphery and detecting a reflected wave. Drive section 72e includes a motor, a battery for supplying electric power, and the like, and causes vehicle body portion 72 to travel by rotationally driving wheels 72f according to an operation of a motor. The battery of autonomous movement object 70 is charged while autonomous movement object 70 is stopped in a predetermined charging area in backyard 50b.

Mounting portion 74 is configured to be capable of being lifted and lowered by lifting and lowering portion 77 and includes slide portion 75 on an upper portion thereof to be slidable horizontally between an initial position and a slide position by driving of an actuator (not illustrated), and products 14 are mounted on an upper surface of slide portion 75. Slide portion 75 is provided with conveyors 75a including multiple rollers being rotated by driving of a motor (not illustrated). Mounting portion 74 can hold products 14 on slide portion 75 by making each roller non-rotatable by stopping the driving of conveyors 75a, and can put out products 14 on slide portion 75 by driving conveyors 75a. Conveyors 75a may be belt conveyors or may be put out by pushing out products 14 with a cylinder or the like instead of conveyors 75a. Further, conveyors 75a, the cylinder, or the like need not be provided on slide portion 75, and products 14 may be put out by tilting slide portion 75 obliquely or the like. Lifting and lowering portion 77 is configured as, for example, a pantograph-type lifting and lowering device to lift and lower mounting portion 74. Lifting and lowering portion 77 may be configured to be lifted and lowered by a cylinder or the like.

When autonomous movement object 70 mounts product 14 mounted on cart 18 on mounting portion 74, control section 72a first causes lifting and lowering portion 77 to lift mounting portion 74 to a height where slide portion 75 enters between support members 16 that support product 14 (product 14 on the right side of an uppermost stage in Fig. 3) of a conveyance target. Next, control section 72a controls lifting and lowering portion 77 such that slide portion 75 slides to enter between support members 16 and then lifts slightly to support product 14 on slide portion 75. Subsequently, control section 72a controls lifting and lowering portion 77 such that slide portion 75 slides to the initial position on mounting portion 74 to pull out product 14 and mounting portion 74 is lowered to a lower end position. Unnecessary support members 16 are collected by a worker. Autonomous movement object 70 may collectively convey multiple products 14 for each cart 18.

In addition, as illustrated in Fig. 1, conveyance system 10 includes management device (system management device) 20 for managing the entire system, distribution PC (warehouse management device) 31 for managing distribution warehouse 30, and store PC (store management device) 51 for managing store 50.

Management device 20 includes control section 22, storage section 23, and communication section 24. Control section 22 includes CPU and controls the entire device. Storage section 23 stores various application programs and various types of data. Storage section 23 stores display shelf information 23a and the like related to display shelf 58 of each store 50. Communication section 24 is connected to distribution PC 31 and store PC 51 through network 12 and exchanges information with distribution PC 31 and store PC 51. In addition, communication section 24 can communicate with autonomous movement object 70 through wireless access point 59 connected to network 12 and outputs a conveyance instruction or the like to autonomous movement object 70.

Fig. 4 is an explanatory diagram illustrating an example of display shelf information 23a. Display shelf information 23a stores identification information of each display shelf 58, a product type indicating the type of product 14, and a layout position of each display shelf 58 in association with each other. The identification information of display shelf 58 is determined for each of multiple regions of display shelves 58(1) to 58(7). For example, in display shelves 58(1) to 58(4), identification information (for example, 1-a or the like) in which a left half in Fig. 2 is divided into regions a to d, and identification information (for example, 1-e or the like) in which a right half in Fig. 2 is divided into regions e to h are determined. In display shelves 58(5) to 58(7), identification information (for example, 5-a or the like) in which upper and lower regions are divided into a and b in Fig. 2 is determined. As the type of product 14, for example, information of a major category, such as a household product, a fresh food, and a frozen food, and information of a minor category, such as sanitary products, laundry products, kitchen products, and toilet products in the case of the household product are determined. In addition, as the layout position, position coordinates indicating respective ranges of the respective regions of display shelves 58(1) to 58(7) are determined in an XY coordinate system having a predetermined reference position of sales floor 50a as an origin. Display shelf information 23a may include a layout position or the like of an installation base of POS terminal 60. In addition, one display shelf 58 is not limited to being divided into multiple regions, and information may be determined for each region as a display shelf.

Distribution PC 31 is installed in distribution warehouse 30 and performs inventory management, delivery management, and the like of products 14 in distribution warehouse 30. Distribution PC 31 includes control section 32, storage section 33, communication section 34, input device 35, and display device 36. Control section 32 includes CPU and controls the entire device. Storage section 23 stores various application programs and various types of data. In addition to exchanging information with management device 20 through network 12, communication section 24 transmits a work instruction or the like to a mobile terminal or the like of a worker (not illustrated) in distribution warehouse 30. Input device 35 is a device such as a keyboard or a mouse through which a worker performs an input operation. Display device 36 is a device that displays various types of information, such as a liquid crystal display.

Store PC 51 is installed in store 50 and performs sales management, inventory management, and the like of products 14 in store 50. Store PC 51 includes control section 52, storage section 53, communication section 54, input device 55, and display device 56. Control section 52 includes CPU and controls the entire device. Storage section 53 stores various application programs and various types of data. Storage section 53 stores display shelf information 53a and the like related to display shelf 58 of store 50. In addition to exchanging information with management device 20 through network 12, communication section 54 transmits a work instruction or the like to mobile terminal P or the like of worker M. Input device 55 is a device such as a keyboard or a mouse through which a worker performs an input operation. Display device 56 is a device that displays various types of information, such as a liquid crystal display.

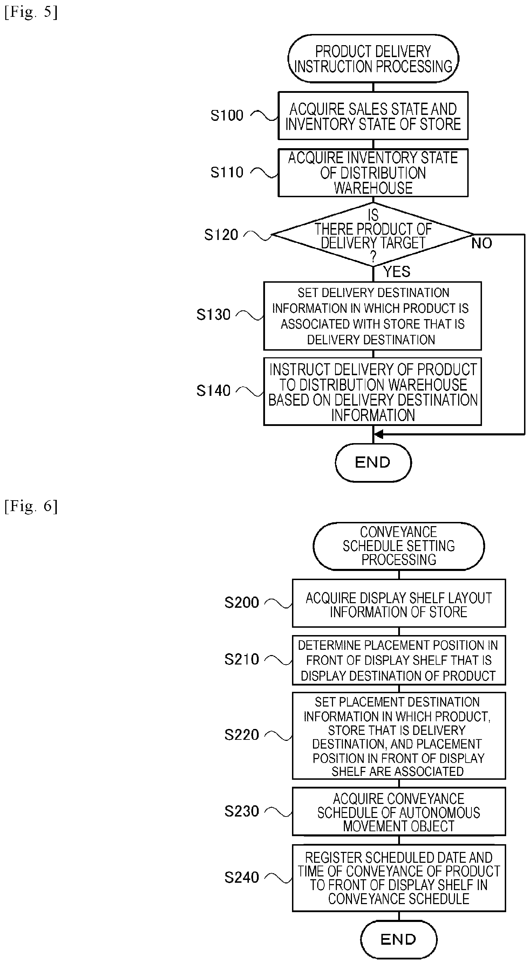

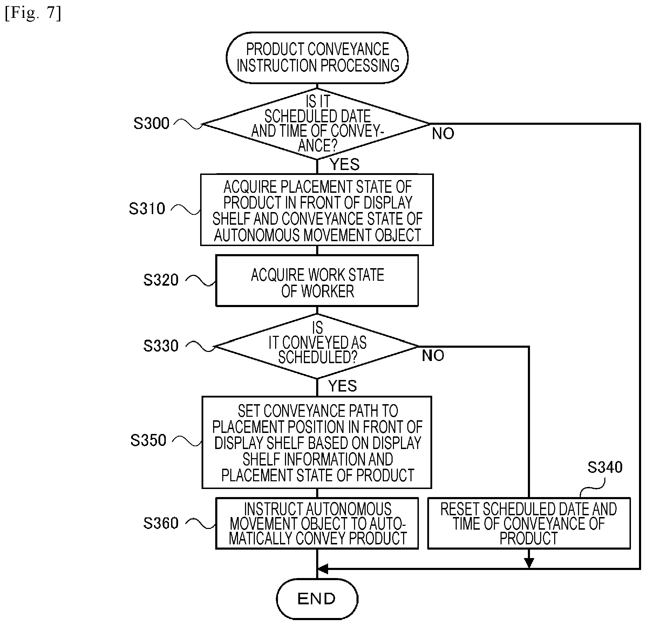

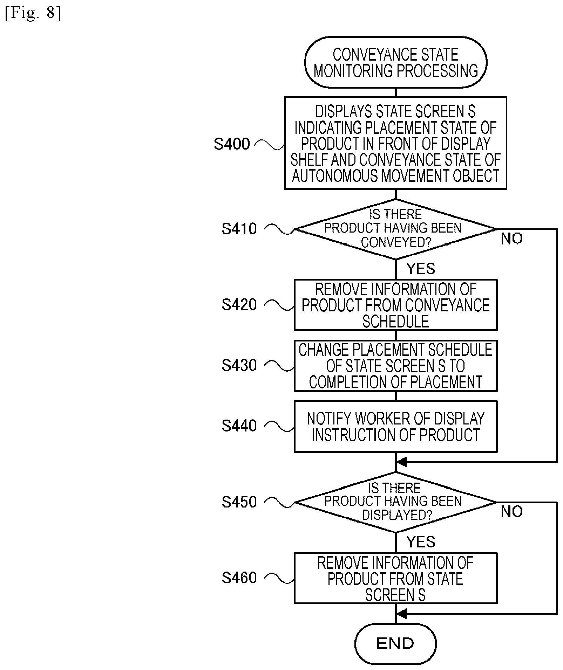

Next, a process of delivering product 14 from distribution warehouse 30 to store 50 and displaying product 14 on display shelf 58, in conveyance system 10, will be described. Fig. 5 is a flowchart illustrating an example of product delivery instruction processing. Fig. 6 is a flowchart illustrating an example of conveyance schedule setting processing. Fig. 7 is a flowchart illustrating an example of product conveyance instruction processing. Fig. 8 is a flowchart illustrating an example of conveyance state monitoring processing. These are stored in storage section 23 of management device 20 and are performed while control section 22 exchanges information with distribution PC 31 and store PC 51.

In the product delivery instruction processing of Fig. 5, control section 22 acquires a sales state and an inventory state of products 14 from store PC 51 (S100), and acquires the inventory state of products 14 from distribution PC 31 (S110). A sales state is generated as store PC 51 collects sales results of various products from each POS terminal 60, and an inventory state of products 14 updated according to results is acquired together. The inventory state of distribution warehouse 30 is updated by distribution PC 31 every time product 14 is delivered to distribution warehouse 30 or product 14 is delivered from distribution warehouse 30.

Subsequently, control section 22 determines whether there is product 14 of a delivery target delivered to store 50 (S120). For example, control section 22 determines product 14 that is in stock in distribution warehouse 30 as product 14 of a delivery target delivered among products 14 that are low in stock or missing in store 50 and products 14 with good sales such as the number of sales exceeding a predetermined number. In addition, control section 22 determines product 14 that is in stock in distribution warehouse 30 as product 14 of a delivery target among product 14 determined as a delivery target by a head office of store 50 regardless of a sales state or an inventory state, for example, product 14 of which sales period or season is limited and product 14 regularly delivered to store 50. When it is determined in S120 that there are no product 14 of a delivery target, control section 22 ends the present processing.

Meanwhile, when it is determined that there is product 14 of a delivery target, control section 22 sets delivery destination information in which product 14 is associated with store 50 that is a delivery destination (S130), instructs distribution PC 31 to deliver product 14 based on the delivery destination information (S140), and ends the present processing. Distribution warehouse 30 (delivery source) instructs a worker or the like to perform a preparation work of delivery. As the preparation work, a worker performs a work of attaching, to product 14, for example, a label to which information of store 50 that is the delivery destination or a tag such as RFID in which the information is registered. Alternatively, the worker may cause a read device to read identification information such as a barcode attached to product 14 or cause an image processing device to recognize the identification information by image processing, and perform a work of associating and registering the store information of the delivery destination. When the work ends, distribution warehouse 30 loads products 14 into delivery vehicle 40 by a worker, a robot (not illustrated), or the like and causes products 14 to be delivered to store 50. Distribution PC 31 transmits, to management device 20, a message indicating that the products 14 are delivered, a scheduled date and time of arrival at store 50, and the like.

In the conveyance schedule setting processing of Fig. 6, control section 22 first acquires display shelf information 23a (53a) of store 50 that is the delivery destination of product 14 (S200). Next, control section 22 determines display shelf 58 (region) that is a display destination based on information of product 14 and display shelf information 23a, and sets a placement position in front of display shelf 58 (S210). For example, control section 22 collates the information of product 14 with the type of a product in display shelf information 23a, and determines display shelf 58 to which the type of the product is matched. In addition, control section 22 sets the placement position in front of display shelf 58 based on a layout position of the determined display shelf 58. The placement position is not limited to the front of display shelf 58 and may be any position around display shelf 58 and may be, for example, a position on the side of display shelf 58 as long as the side of display shelf 58 is open by a path or the like.

When the placement position is set, control section 22 sets placement destination information (association information) in which product 14, store 50 that is the delivery destination, and the placement position in front of display shelf 58 are associated with each other (S220). Subsequently, control section 22 acquires a conveyance schedule of autonomous movement object 70 (S230), registers scheduled date and time of conveyance to a placement position in front of display shelf 58 in a conveyance schedule in association with product 14 based on the placement destination information (S230), and ends the present processing. The registration of the conveyance schedule may be performed before product 14 arrives at store 50 or may be performed after product 14 arrives at store 50. When the registration is performed before product 14 arrives at store 50, control section 22 may register, in the conveyance schedule, the scheduled date and time of conveyance later than the scheduled date and time of arrival of product 14 at store 50. In addition, control section 22 may perform registration such that product 14 is conveyed to a placement position in front of display shelf 58 as soon as product 14 arrives. That is, products 14 delivered to store 50 are not limited to storing in backyard 50b and may be immediately conveyed to the placement position in front of display shelf 58.

In the product conveyance instruction processing in Fig. 7, control section 22 determines whether the scheduled date and time of conveyance reaches based on the conveyance schedule of product 14 (S300), and ends the present processing when it is determined that the scheduled date and time of conveyance does not reach. Meanwhile, when it is determined that the scheduled date and time of conveyance reaches, control section 22 acquires a placement state of product 14 in front of display shelf 58 and a conveyance state of autonomous movement object 70 (S310), and acquires a work state of worker M (S320). As the work state of worker M, information such as the number of workers M around display shelf 58 of sales floor 50a, that is, the number of workers M who can perform a display work of automatically conveyed product 14, and the like, is acquired based on the positional information of mobile terminal P of worker M and the information from store PC 51.

Next, control section 22 determines whether product 14 can be automatically conveyed as scheduled (S330). For example, control section 22 determines that the automatic conveyance is not possible when products 14 placed in front of display shelf 58 of the conveyance schedule are not yet displayed, or when entire autonomous movement object 70 is being automatically conveyed, or the like. In addition, control section 22 determines that the automatic conveyance is not possible when there are few workers M who can perform the display work. When it is determined in S330 that product 14 cannot be automatically conveyed as scheduled, control section 22 resets new scheduled date and time of conveyance of product 14 to the conveyance schedule (S340), and ends the present processing. Meanwhile, when it is determined that product 14 can be automatically conveyed as scheduled, control section 22 sets a conveyance path to a placement position in front of display shelf 58 based on display shelf information 23a and the placement state of product 14 in front of display shelf 58 (S350). Then, control section 22 instructs autonomous movement object 70 to automatically convey product 14 based on the conveyance path (S360), and ends the present processing.

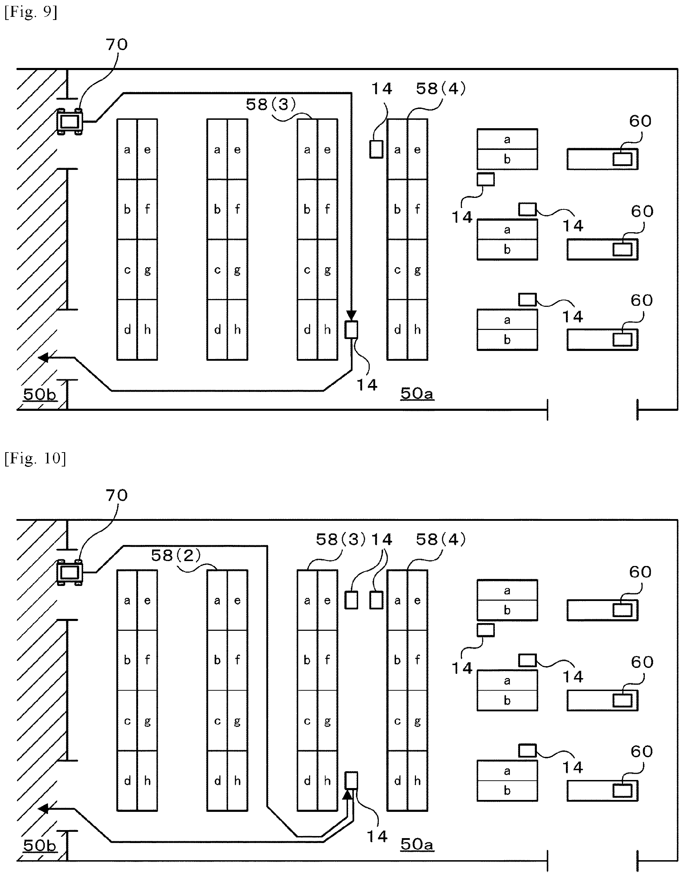

Figs. 9 and 10 are explanatory diagrams illustrating examples of the conveyance path. In the example of Fig. 9, a case where only one product 14 is placed in front of display shelf 58(4-a) in a path between display shelves 58 (3) and 58(4) is illustrated. In this case, a one-way conveyance path is set such that autonomous movement object 70 starting from backyard 50b places product 14 in front of display shelf 58(3-h) of a target through a path between display shelves 58(3) and 58(4) and returns to backyard 50b. Autonomous movement object 70 drives conveyors 75a to put out product 14 disposed on mounting portion 74 (slide portion 75) onto a floor and place product 14 at a placement position. In addition, the example of Fig. 10 illustrates a case where products 14 (two in total) are placed in front of display shelf 58(3-e) and display shelf 58(4-a) one by one and autonomous movement object 70 has difficulty in moving therebetween. In this case, a conveyance path is set such that autonomous movement object 70 started from backyard 50b bypasses a path between display shelves 58(3) and 58(4) and passes through a path between display shelves 58(2) and 58(3) so as to bypass placement positions of two products 14 between display shelves 58(3) and 58(4), and places product 14 in front of display shelf 58(3-h) of a target and returns to backyard 50b.

In the conveyance state monitoring processing of Fig. 8, control section 22 displays state screen S indicating a placement state of products 14 in front of display shelf 58 and a conveyance state of autonomous movement object 70 (S400). Control section 22 may display state screen S on display device 56 of store 50, a display section of mobile terminal P of worker M, or the like. Alternatively, control section 22 may display state screen S on display operation section 66 of POS terminal 60, a monitor screen installed in store PC 51, or the like.

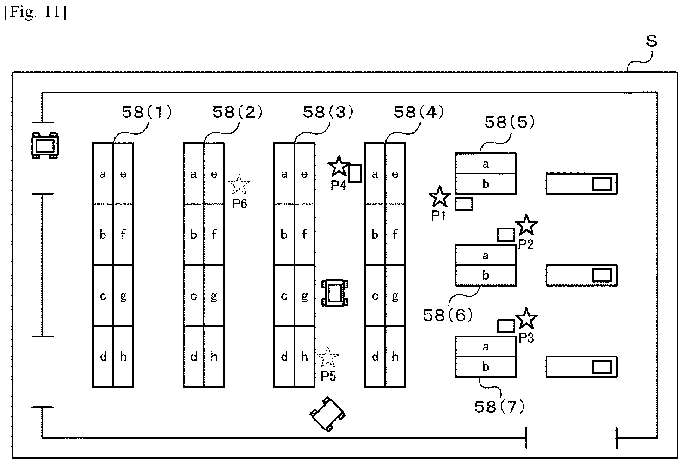

Fig. 11 is an explanatory diagram illustrating an example of state screen S. As illustrated in the figure, as a placement state of product 14 in front of display shelf 58, a rectangular mark indicating placed product 14 that has been placed, a solid-line star mark indicating that placement has been completed, and an order in which products 14 were placed (for example, P1 to P4) are displayed. In addition, a star mark with a dash line indicating a placement schedule and an order in which products 14 are to be placed (for example, P5 and P6) are also displayed at a scheduled location where products 14 are to be placed . Worker M can check state screen S to perform, for example, a display work from product 14 close to a current position, to perform a display work from a location where undisplayed products 14 are gathered, or to perform a display work by avoiding a path in which autonomous movement object 70 is in autonomous conveyance. In this way, worker M can efficiently perform a display work of product 14 while checking a conveyance state of autonomous movement object 70 and a placement state of product 14.

Next, control section 22 determines whether there is product 14 having been automatically conveyed, based on the communication with autonomous movement object 70 (S410) . When it is determined that there is product 14 having been automatically conveyed, that is, there is product 14 placed in front of display shelf 58, control section 22 removes the information of product 14 from the conveyance schedule (S420), and changes the display on state screen S to a display in which product 14 has been placed (S430). That is, a rectangular mark indicating placed product 14 is added to state screen S, and the star mark with a dash line is changed to a solid-line star mark. In addition, a display instruction of product 14 is notified to mobile terminal P of worker M (S440), worker M is notified that product 14 which is automatically conveyed, and a display work of product 14 is prompted. When it is determined in step S410 that there are no product 14 having been automatically conveyed, control section 22 skips step S420 to step S440.

Subsequently, control section 22 determines whether there is product 14 having been displayed by worker M (S450), and ends the present processing when it is determined that there is no product 14 having been displayed. When the display of product 14 is completed, worker M selects product 14 on state screen S of mobile terminal P or the like, and transmits a completion notification. When the completion notification is received directly or through store PC 51 or the like, control section 22 determines that there is product 14 having been displayed. When it is determined in S450 that there is product 14 having been displayed, control section 22 removes the display of product 14 from state screen S (S460), and ends the present processing. Control section 22 may cause autonomous movement object 70 to collect an empty box that product 14 therein is displayed, based on reception of the completion notification from worker M.

Here, a correspondence relation between elements of the present embodiment and elements of the present disclosure will be clarified. Conveyance system 10 of the present embodiment corresponds to a conveyance system of the present disclosure, storage section 23 storing display shelf information 23a corresponds to a storage section, control section 22 for performing S200 to S220 of conveyance schedule setting processing corresponds to a setting section, autonomous movement object 70 corresponds to a movement object, and control section 22 for performing product conveyance instruction processing corresponds to a control section. A display section of mobile terminal P and display device 56 of store PC 51 correspond to a display section, and control section 22 that performs conveyance state monitoring processing corresponds to a control section. Control section 22 that performs product conveyance instruction processing corresponds to an instruction section. The present embodiment clarifies an example of a conveyance method of the present disclosure by describing an operation of conveyance system 10.

In conveyance system 10 described above, management device 20 (control section 22) sets placement destination information (association information) in which product 14 is associated with a placement position (predetermined position) in front of display shelf 58 that is the display destination, based on display shelf information 23a. In addition, control section 22 causes autonomous movement object 70 to automatically convey and place product 14 based on display shelf information 23a and the placement destination information. Therefore, product 14 can be automatically conveyed and placed in front of display shelf 58 with a simple system configuration. In addition, worker M of store 50 may display product 14 placed in front of display shelf 58 on display shelf 58 and does not require move product 14 to the front of display shelf 58. Therefore, it is possible to reduce a display workload of product 14 and to efficiently display product 14.

In addition, management device 20 notifies worker M of a display instruction when autonomous movement object 70 automatically conveys and displays product 14, and then, worker M may display product 14 on display shelf 58 according to the notification, and thus, the display workload can be reduced.

In addition, management device 20 displays state screen S such as a conveyance state of autonomous movement object 70 and a placement state of product 14 on display device 56 of store PC 51, a display section of mobile terminal P, or the like, and thus, worker M can efficiently perform a display work of product 14.

In addition, management device 20 sets a conveyance path of autonomous movement object 70 based on display shelf information 23a and a placement state of product 14, and thus, even when there is product 14 placed in front of display shelf 58, products 14 can be efficiently automatically conveyed by setting an appropriate conveyance path.

In addition, management device 20 instructs distribution warehouse 30 to deliver product 14 based on the delivery destination information in which product 14 is associated with store 50 that is the delivery destination, and thus, it is possible to collectively and efficiently process delivery of product 14 to store 50 and an automatic conveyance to sales floor 20a.

It goes without saying that the present disclosure is not limited to the above-described embodiments and may be implemented in various aspects as long as the present disclosure belongs to the technical scope of the present disclosure.

For example, in the above-described embodiments, management device 20 sets a placement destination information in which product 14, store 50 that is the delivery destination, and a placement position in front of display shelf 58 are associated with each other in the conveyance schedule setting processing, but the configuration is not limited to this. For example, management device 20 may set the placement destination information by including the delivery destination information when setting the delivery destination information in the product delivery instruction processing. In addition, the placement destination information (association information) may be information in which product 14 is associated with at least one of display shelf 58 that is the display destination and a predetermined position in the vicinity including the front of display shelf 58, or may include other information. In addition, the placement destination information is information in which product 14 is associated with the placement position in front of display shelf 58 that is the display destination, but the placement destination information is not limited to this. For example, management device 20 may set placement destination information in which product 14 is associated with display shelf 58 that is the display destination and instruct autonomous movement object 70 to set the placement position in front of display shelf 58 when instructing an automatic conveyance.

In the embodiment, management device 20 sets the delivery destination information and instructs distribution warehouse 30 to deliver product 14 based on the setting, but the configuration is not limited to this. For example, one or both of the setting of the delivery destination information and a delivery instruction of product 14 may be performed by a device different from management device 20 in conveyance system 10 or may be performed by a system different from conveyance system 10.

In the embodiment, management device 20 sets a conveyance path based on display shelf information 23a and a placement state of products 14, but the present disclosure is not limited thereto, and management device 20 may set the conveyance path based on only display shelf information 23a, or may cause autonomous movement object 70 to perform an autonomous travel by setting only a placement position of a target without setting the conveyance path. Even in this manner, autonomous movement object 70 can perform an automatic conveyance while avoiding product 14 placed in front of display shelf 58. Alternatively, another device other than management device 20, such as store PC 51, may set the conveyance path.

In the embodiment, both a conveyance state of autonomous movement object 70 and a placement state of product 14 are displayed on state screen S, but the present disclosure is not limited thereto, and only one of the states may be displayed. Alternatively, such state screen S need not be displayed.

In the embodiment, autonomous movement object 70 is exemplified as a movement object that automatically conveys product 14, but the configuration is not limited to this. For example, autonomous movement object 70 may be a movement object that travels along a guide tape, such as a magnetic tape or an optical tape provided on a floor surface in store 50.

In the embodiment, POS terminal 60 is configured such that a clerk performs settlement of a product, but is not limited thereto, and may have a configuration of a so-called self-register in which a customer himself/herself performs the settlement of the product, or may have a configuration that does not include display operation section 66 for a clerk, or the like.

Here, the conveyance system of the present disclosure may be configured as follows. For example, in the conveyance system of the present disclosure, the control section may notify a worker of the store of an instruction to display the product on the display shelf when the movement object automatically conveys and places the product at the predetermined position. Accordingly, the worker may display the product on the display shelf according to the notification, and thus, a display workload of the product can be further reduced.

The conveyance system of the present disclosure includes a display section configured to be visually recognized by a worker of the store, and the control section may cause the display section to display a conveyance state of the product by the movement object and a placement state of a product that is placed at the predetermined position and not displayed on the display shelf. Accordingly, the worker can check a conveyance state of a product and a placement state of the product by using by a movement object, and thus, a display work of the product can be efficiently performed.

In the conveyance system of the present disclosure, the control section may set a conveyance path of the movement object based on the display shelf information and a placement state of a product that is placed at the predetermined position and not displayed on the display shelf. Accordingly, even when there is a product that is placed at predetermined positions but is not yet displayed, the product can be automatically and efficiently conveyed by setting an appropriate conveyance path, and thus, a display work of the product can be efficiently performed.

In the conveyance system of the present disclosure, the setting section may include an association between a product and the store that is a delivery destination of the product into the association information, or can set the association separately from the association information, and the conveyance system may include an instruction section configured to instruct a delivery source to deliver the product to the store that is the delivery destination, based on the association between the product and the store that is the delivery destination of the product. Accordingly, the conveyance system can collectively perform a delivery to a store and an automatic conveyance to a sales floor, and thus, it is possible to efficiently perform efficient processing compared to processing performed by a separate system.

In addition, a conveyance method of the present disclosure is a conveyance method of automatically conveying a product to a sales floor of a store, and is summarized in including (a) a step of acquiring display shelf information including a layout of a display shelf provided in the sales floor and a type of a product to be displayed on the display shelf, (b) a step of setting association information in which a product is associated with at least one of the display shelf that is a display destination of the product and a predetermined position in a vicinity including a front of the display shelf based on the display shelf information and (c) a step of causing the movement object to automatically convey and place a product delivered to the store or a product delivered to the store and stored in a backyard of the store to the predetermined position based on the display shelf information and the association information.

The conveyance method of the present disclosure can reduce a display workload of a product and to efficiently display the product in the same manse as the above-described conveyance system. In this conveyance method, various aspects of the above-described conveyance system may be adopted, and steps for realizing each function of the above-described conveyance system may be added.

### Industrial Applicability

The present disclosure can be applied to a field such as distribution of products.

### Reference Signs List

10 conveyance system, 12 network, 14 product, 16 support members, 18 cart, 20 management device, 22, 32, 52 control section, 23, 33, 53 storage section, 23a, 53a display shelf information, 24, 34, 54 communication section, 30 distribution warehouse, 31 distribution PC, 35 input device, 36 display device, 40 delivery vehicle, 50 store, 50a sales floor, 50b backyard, 51 store PC, 55 input device, 56 display device, 58, 58(1) to 58(7) display shelf, 59 access point, 60 POS terminal, 61 control section, 62 storage section, 63 communication section, 64 input section, 65 read section, 66 display operation section, 67 display section for customer, 68 deposit section, 69 print section, 70 autonomous movement object, 72 vehicle body portion, 72a control section, 72b storage section, 72c communication section, 72d detection section, 72e drive section, 72f wheels, 74 mounting portion, 75 slide portion, 75a conveyor, 77 lifting and lowering portion, M worker (clerk), P mobile terminal, S state screen

## Claims

1. A conveyance system for automatically conveying a product to a sales floor of a store, comprising:
a storage section configured to store display shelf information including a layout of a display shelf provided in the sales floor and a type of product to be displayed on the display shelf;
a setting section configured to set association information in which a product is associated with at least one of the display shelf that is a display destination of the product and a predetermined position in a vicinity including a front of the display shelf based on the display shelf information;
a movement object configured to automatically convey a product; and
a control section configured to cause the movement object so as to automatically convey and place a product delivered to the store or a product delivered to the store and stored in a backyard of the store to the predetermined position based on the display shelf information and the association information.

2. The conveyance system according to Claim 1, wherein the control section notifies a worker of the store of an instruction to display the product on the display shelf when the movement object automatically conveys and places the product at the predetermined position.

3. The conveyance system according to Claim 1 or 2, further comprising:
a display section configured to be visually recognized by a worker of the store,
wherein the control section causes the display section to display a conveyance state of the product by the movement object and a placement state of a product that is disposed at the predetermined position and not displayed on the display shelf.

4. The conveyance system according to any one of Claims 1 to 3, wherein
the control section sets a conveyance path of the movement object based on the display shelf information and a placement state of a product that is placed at the predetermined position and not displayed on the display shelf.

5. The conveyance system according to any one of Claims 1 to 4, wherein
the setting section includes an association between a product and the store that is a delivery destination of the product into the association information, or sets the association separately from the association information, and
the conveyance system further comprises an instruction section configured to instruct a delivery source to deliver the product to the store that is the delivery destination, based on the association between the product and the store that is the delivery destination of the product.

6. A conveyance method of automatically conveying a product to a sales floor of a store, the conveyance method comprising:
(a) a step of acquiring display shelf information including a layout of a display shelf provided in the sales floor and a type of a product to be displayed on the display shelf;
(b) a step of setting association information in which a product is associated with at least one of the display shelf that is a display destination of the product and a predetermined position in a vicinity including a front of the display shelf based on the display shelf information; and
(c) a step of causing a movement object to automatically convey and place a product delivered to the store or a product delivered to the store and stored in a backyard of the store to the predetermined position based on the display shelf information and the association information.
